# EUROPEAN PATENT APPLICATION

(11) **EP 4 343 285 A1**
(43) Date of publication of application: **27.03.2024**
(21) Application number: 23382950.6
(22) Date of filing: 20.09.2023
(51) Int. Cl.: G01F 23/292, G01S 17/08, G01S 17/89

(54) **AUTONOMOUS ELECTRONIC DEVICE WITH MATRIX MODULE OF LEVEL MEASUREMENT LIDAR SENSORS WITH WIRELESS DATA TRANSMISSION**

(30) Priority: 20.09.2022 ES 202231528 U
(71) Applicant: RETAIL TOOLS, S.L., 28033 Madrid (ES)
(72) Inventor: PAVON HAASS, Oscar Alberto, 28660 Boadilla del Monte (ES); PORQUERAS ALONSO, Gabriel Alberto, 28043 Madrid (ES)
(74) Representative: Elzaburu S.L.P.

(57) **Abstract**

The present invention relates to an autonomous electronic device characterised in that it comprises a matrix module of level measurement LIDAR sensors with wireless data transmission comprising a matrix sensor to obtain several simultaneous readings and a wireless data transmission module.

## Description

### OBJECT OF THE INVENTION

The present invention relates to an autonomous electronic device with a matrix module of level measurement LIDAR sensors with wireless data transmission. This device has a matrix module that has several matrix distance measurement sensors with LIDAR technology. It has data storage memory and a wireless transmission module.

### BACKGROUND OF THE INVENTION

Various autonomous electronic devices with reservoir level measurement sensors are known. Among them, depending on the technology used, are meters using ultrasound or radar technology and discriminate according to the change in density or microwave respectively, the latter case in which the technology is based on the change in dielectric constant. According to the data transmission method, it can be wired or wireless. Based on the power supply of the device, they can be powered by an external source or by an internal battery.

### DESCRIPTION OF THE INVENTION

The disclosure of the autonomous electronic device with a matrix module of level measurement LIDAR sensors with wireless data transmission comprising a preferably plastic housing, which contains inside an electronic control board and a non-contact measurement sensor of LIDAR technology that is a multiple laser system that allows measuring the distances between the laser emission points of that matrix sensor to an object or surface is detailed below. The time it takes each laser emission to reach its target and return from it, is what determines the distance. Being a matrix measurement device, the result obtained is a multi-point mapping and with the help of software provided with a discrimination algorithm the debugged values are obtained. A wireless communications module is also integrated into this electronic board. The power supply and battery of the device are housed inside the casing. It optionally has visual and audible indicators. The device may have the variant to take measurements in atmospheres of explosive environment, i.e. the device may comprise means configured to work in said atmospheres, according to the required approval. Optionally, the device can integrate solar energy charging panels. Additionally, the device may comprise one and/or more additional environmental parameter measurement sensors.

To complement the description to be made, the following specification is accompanied by drawings on the basis of which the innovation and advantages of the invention will be more readily understood. The device may be attached with adhesive, equipment and/or magnets.

### BRIEF DESCRIPTION OF THE DRAWINGS

Figure 1.- Shows a perspective view of the autonomous electronic device with a matrix module of level measurement LIDAR sensors with wireless data transmission. The device has an upper housing (1) and a lower housing (2) preferably made of plastic material, it has two LED indicators (3) and (4). The measurement sensor (5) is located in the lower housing of the device. On one side there is an activation and reset button (6) for the device.
Figure 2.- Shows a perspective view of the autonomous electronic device with a matrix module of level measurement LIDAR sensors with wireless data transmission. In the upper housing there are charging solar panels (7).
Figure 3.- Shows a sectional view, where it is seen how on the inside, are the battery (8) as well as the control electronics and wireless communications (9).

### DESCRIPTION OF A PREFERRED EMBODIMENT

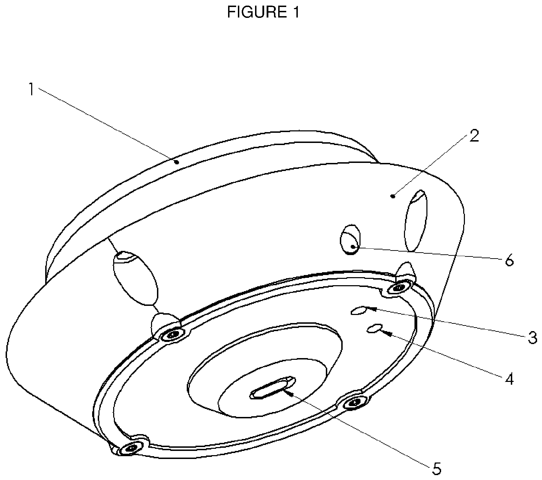

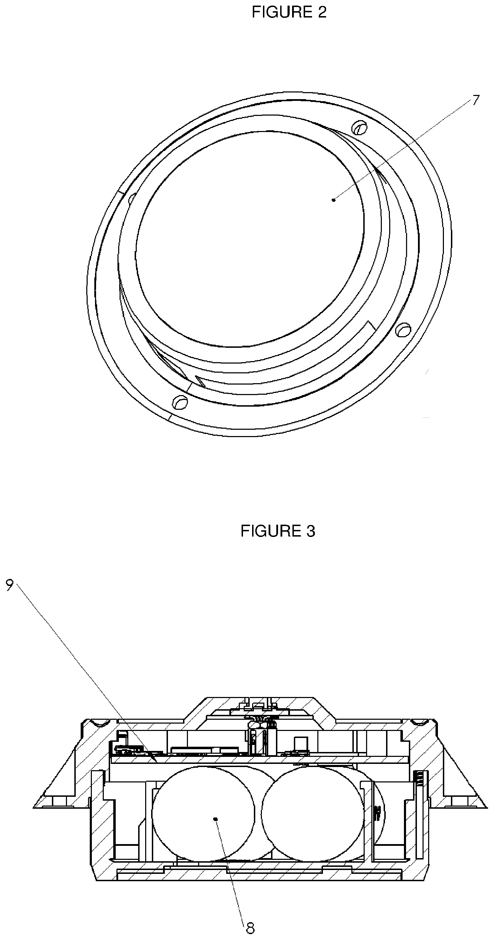

In view of the attached figures Figure 1, Figure 2 and Figure 3, it can be seen how the autonomous electronic device with the level measurement LIDAR sensor matrix module with wireless data transmission has an upper housing (1) and a lower housing (2) made of plastic material, has two battery level led indicators (3) and correct operation (4), the measurement LIDAR sensor matrix module (5), a device activation and reset button (6) and one or more optional solar panels (7). Inside, the battery (8) and the control and communications electronics (9) are housed.

## Claims

1. Autonomous electronic device **characterized by** comprising matrix module of level measurement LIDAR sensors with wireless data transmission comprising a matrix sensor to obtain several simultaneous readings and a wireless data transmission module.

2. Autonomous electronic device according to claim 1, wherein the device comprises one or more charging solar panels.

3. Autonomous electronic device according to any one of claims 1 and 2, wherein the module of LIDAR sensors is configured to work in atmospheres of explosive environment.

4. Autonomous electronic device according to any one of the preceding claims, wherein the device comprises one and/or several additional environmental parameter measurement sensors.
